(19) Europäisches Patentamt
European Patent Office
Office européen des brevets

(11) **EP 4 414 465 A1**

(12) **EUROPEAN PATENT APPLICATION**
published in accordance with Art. 153(4) EPC

(43) Date of publication:
**14.08.2024 Bulletin 2024/33**

(21) Application number: **22889745.0**

(22) Date of filing: **13.10.2022**

(51) International Patent Classification (IPC):
*C21D 8/12* (2006.01)   *C21D 9/46* (2006.01)
*C21D 9/56* (2006.01)   *C22C 38/00* (2006.01)
*C22C 38/06* (2006.01)   *C22C 38/60* (2006.01)
*H01F 1/147* (2006.01)

(52) Cooperative Patent Classification (CPC):
**C21D 8/12; C21D 9/46; C21D 9/56; H01F 1/147;**
C22C 38/00; C22C 38/06; C22C 38/60; Y02P 10/20

(86) International application number:
**PCT/JP2022/038167**

(87) International publication number:
**WO 2023/079922 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2021 JP 2021179145**

(71) Applicant: JFE Steel Corporation
Tokyo 100-0011 (JP)

(72) Inventors:
• **KAMBARA, Hideto**
 **Tokyo 100-0011 (JP)**
• **SAKAI, Ken**
 **Tokyo 100-0011 (JP)**
• **KITAMURA, Shinichi**
 **Tokyo 100-0011 (JP)**
• **NAKASHIMA, Toru**
 **Tokyo 100-0011 (JP)**

(74) Representative: **Grünecker Patent- und Rechtsanwälte**
**PartG mbB**
**Leopoldstraße 4**
**80802 München (DE)**

(54) **FINISH ANNEALING FACILITY FOR ELECTROMAGNETIC STEEL SHEET, FINISH ANNEALING METHOD AND PRODUCTION METHOD FOR ELECTROMAGNETIC STEEL SHEET, AND NON-ORIENTED ELECTROMAGNETIC STEEL SHEET**

(57) Provided is an annealing facility in which a steel sheet after cold rolling is sequentially threaded through an annealing furnace having at least a first region, a second region, and a third region to continuously undergo finish annealing. Each of the regions of the annealing furnace is independently controllable in terms of the gas composition and the dew point of the atmosphere. The second region is composed of a heating zone, a soaking zone, and a cooling zone all having atmospheric temperatures of 900°C or higher, with an atmospheric gas controlled to have a nitrogen content of 30 vol% or less and a dew point of -40°C or lower. Further, an electrical steel sheet, preferably a non-oriented electrical steel sheet with low iron loss is produced by performing finish annealing using this annealing facility.

FIG. 3

**Description**

Technical Field

The present invention relates to a finish annealing facility that is preferably used for the production of electrical steel sheets, a finish annealing method and an electrical steel sheet production method that use this facility, and a non-oriented electrical steel sheet with excellent magnetic properties.

Background Art

An electrical steel sheet, for example, a non-oriented electrical steel sheet is typically produced as follows: Steel adjusted to a predetermined ingredient composition is melted to be formed into a steel material (slab) by a method such as a continuous casting method, and then the slab is subjected to hot-rolling to form a hot-rolled sheet. The hot-rolled sheet is subjected to hot-band annealing as necessary, and then one cold rolling or two or more cold rollings with intermediate annealing between each cold rolling is performed thereon to obtain a cold-rolled sheet having a final sheet thickness (product sheet thickness). The cold-rolled sheet is then subjected to finish annealing for imparting desired magnetic properties thereto, and an insulation coating is formed thereon as necessary.

As a technique for performing annealing on a steel sheet, for example, Patent Literature 1 discloses a technique that performs annealing on a steel sheet in a continuous annealing furnace having a heating zone, a heat retention zone (soaking zone), and a cooling zone, with the atmosphere of each zone set to a gas composition containing 1 to 10 vol% hydrogen and, as the rest, 90 to 99 vol% nitrogen and unavoidable impurities.

Citation List

Patent Literature

Patent Literature 1: International Publication No. WO 2007/043273

Summary of Invention

Technical Problem

However, the present inventors found that, when finish annealing is performed on a non-oriented electrical steel sheet in the atmosphere disclosed in Patent Literature 1, desired iron loss properties are not often stably achieved.

Therefore, the present invention aims to solve the above-described problem with the prior art, to provide a finish annealing facility that can achieve excellent iron loss properties, to propose a finish annealing method of an electrical steel sheet and a production method of the steel sheet that use the finish annealing facility, and to stably provide a non-oriented electrical steel sheet having excellent iron loss properties.

Solution to Problem

Toward the solution to the above-described problem, the present inventors vigorously conducted studies with a focus on the influence of the atmosphere inside an annealing furnace of a finish annealing facility on the magnetic properties of an electrical steel sheet. As a result, we learned that the reason why the magnetic properties were unstable in the prior art was due to the nitriding of a steel sheet that occurs during finish annealing. We found that the nitriding of a steel sheet could be inhibited by performing finish annealing in an atmosphere satisfying certain conditions, and that thereby a lower iron loss in a finish-annealed steel sheet could be stably achieved, which led to the development of the present invention.

The present invention based on these insights is as follows.

[1] A finish annealing facility for producing an electrical steel sheet in which a steel sheet after cold rolling is sequentially threaded through an annealing furnace having at least a first region, a second region, and a third region so as to continuously undergo finish annealing, characterized in that: each of the regions of the annealing furnace is independently controllable in terms of the gas composition and dew point of an atmosphere; and the second region is composed of a heating zone, a soaking zone, and a cooling zone all having atmospheric temperatures of 900°C or higher, with an atmospheric gas controlled to have a nitrogen content of 30 vol% or less and a dew point of -40°C or lower.

[2] The cooling zone constituting a part of the second region in the finish annealing facility of the present invention is characterized in that the cooling rate of the steel sheet is controlled to 15°C/s or less.

[3] The first region in the finish annealing facility of the present invention is characterized in that it is a heating zone having an atmospheric temperature lower than 900°C with the nitrogen content in an atmospheric gas controlled to 80 vol% or more.

[4] The present invention further proposes a finish annealing method of an electrical steel sheet characterized in that a steel sheet after cold rolling is subjected to finish annealing using the annealing facility described in any one of [1] to [3].

[5] The present invention further proposes a production method of an electrical steel sheet characterized in that a steel sheet after cold rolling is subjected to finish annealing using the annealing facility according to any one of [1] to [3].

[6] The present invention further proposes a non-oriented electrical steel sheet characterized in that, when the content of nitrogen present as AlN in a layer of 1/20 of a sheet thickness of the steel sheet from one side surface is $N_s$ (mass%), the content of nitrogen present as AlN across the entire sheet thickness is Nt (mass%), and the sheet thickness of the steel sheet is t (mm), $N_s$, Nt, and t satisfy the following Formula (1):

$$(t \times N_t) \div \{(t/10) \times N_s\} \geq 5 \cdots (1)$$

Advantageous Effects of Invention

The present invention can effectively prevent nitriding of a steel sheet that occurs during finish annealing, thereby making it possible to stably produce a non-oriented electrical steel sheet with low iron loss. Thus, the present invention can stably provide a non-oriented electrical steel sheet that is suitable as a core material for motors of hybrid electric vehicles, electric vehicles, vacuum cleaners, high-speed generators, compressors of air conditioners, machine tools, and others.

Brief Description of Drawings

FIG. 1 is a graph showing the influence of a finish annealing atmosphere on iron loss.
FIG. 2 is photographs of cross sections that compare differences between surface layers of product steel sheets depending on the finish annealing atmosphere.
FIG. 3 is a graph showing the influence of nitriding of a surface layer of a steel sheet on iron loss.
FIG. 4 is a graph showing the influence of a nitrogen partial pressure in a finish annealing atmosphere on iron loss.
FIG. 5 is a graph showing the influence of a finish annealing temperature on nitriding of a surface layer of a steel sheet.
FIG. 6 is a graph showing the influence of a dew point of a finish annealing atmosphere on iron loss.
FIG. 7 is a graph showing the influence of a cooling rate in a second region of finish annealing on iron loss.
FIGs. 8(a) to 8(c) is a view illustrating one example of embodiments of the present invention, wherein FIG. 8(a) shows an example of the configuration of a finish annealing facility, FIG. 8(b) shows an example of a heat pattern, and FIG. 8(c) shows examples of control of atmospheres in the facility of FIG. 8(a) as a comparison between the present invention and the prior art.
FIG. 9 is a view illustrating another example of embodiments of the present invention, wherein FIG. 9(a) shows an example of the configuration of a finish annealing facility, FIG. 9(b) showing an example of a heat pattern, and FIG. 9(c) showing examples of controlling atmospheres in the facility of FIG. 9(a) as a comparison between the present invention and the related art.

Description of Embodiments

First, experiments that inspired the development of the present invention will be described.

<Experiment 1>

A steel material (slab) having an ingredient composition including C: 0.0021 mass%, Si: 3.7 mass%, Mn: 0.4 mass%, P: 0.01 mass%, S: 0.0016 mass%, Al: 0.6 mass%, N: 0.0022 mass%, Ti: 0.0014 mass%, Nb: 0.0010 mass%, and O: 0.0025 mass%, with the rest being Fe and unavoidable impurities was hot-rolled into a hot-rolled sheet having a sheet thickness of 1.8 mm. The hot-rolled sheet was subjected to hot-band annealing at 900°C for 30 seconds, pickled, and then cold rolled into a cold-rolled sheet having a final sheet thickness of 0.25 mm. The cold-rolled sheet was then subjected to finish annealing at 1000°C for 10 seconds using a horizontal continuous annealing furnace having a heating zone, a soaking zone, and a cooling zone. In the process, the furnace atmosphere in the soaking zone was set to a mixed gas atmosphere of $H_2:N_2 = 20:80$ as a vol% ratio (dew point: -55°C) or an atmosphere of 100 vol% Ar gas (dew point: -55°C).

A test specimen measuring 180 mm in length and 30 mm in width was cut out from the finish-annealed steel sheet, with the longitudinal direction in an L direction (rolling direction) and with the longitudinal direction in a C direction (perpendicular to rolling direction), and each iron loss $W_{10/400}$ was measured by the Epstein test.

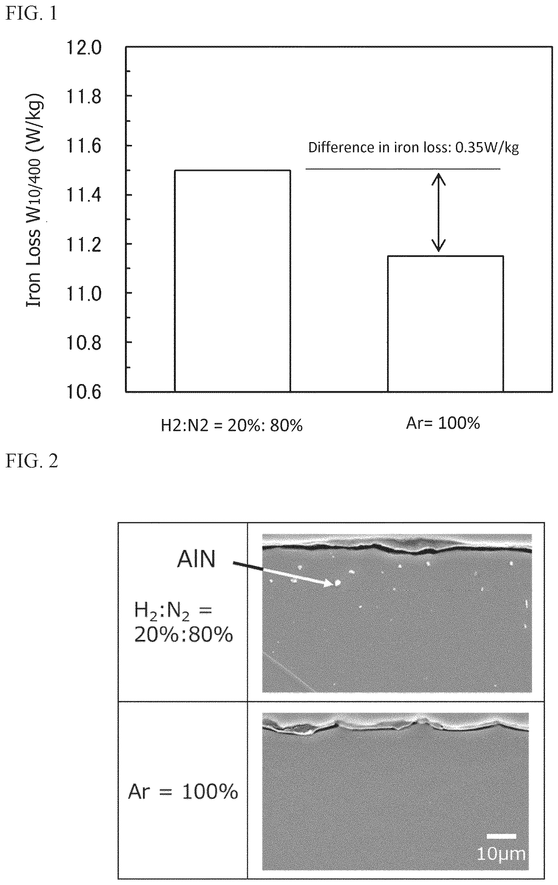

The measurement results of the iron loss are shown in FIG. 1. The test specimen that was subjected to finish annealing in the $(H_2 + N_2)$ mixed gas atmosphere exhibits a high value of iron loss. To examine the cause, cross-sections of the test specimens were observed by SEM. As shown in FIG. 2, in the test specimen with increased iron loss, finely precipitated AlN was recognized in a surface layer of the steel sheet, specifically a layer from the surface of the steel sheet to 1/20 of the sheet thickness (hereinafter also referred to as a "1/20-sheet-thickness layer"). From this result, it was presumed that the cause of the high iron loss value was that fine nitrides were precipitated in the surface layer of the steel sheet due to nitriding that occurred during finish annealing.

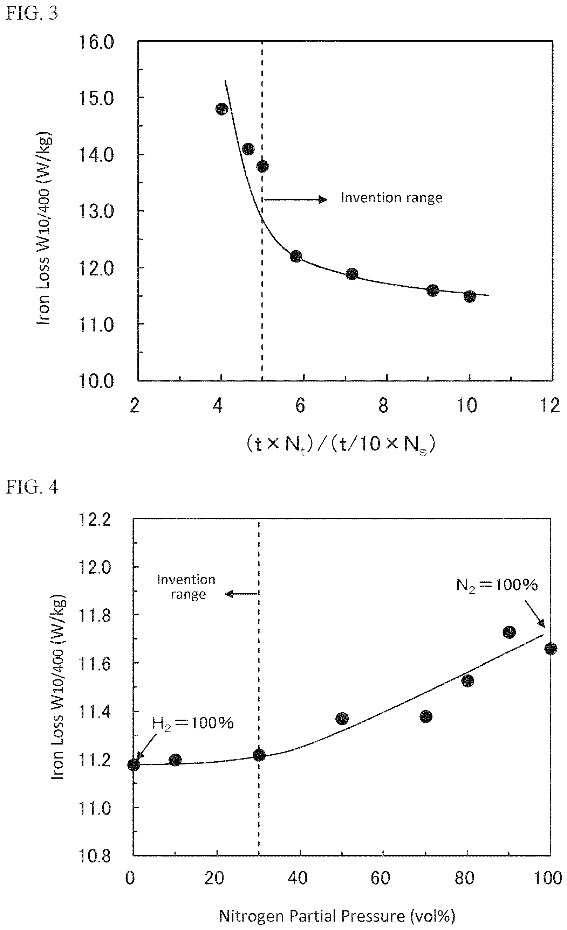

Further, the finish-annealed steel sheet was analyzed for a content $N_s$ (mass%) of N present as AlN (N as AlN) in the 1/20-sheet-thickness layer and a content Nt (mass%) of N present as AlN (N as AlN) across the entire sheet thickness by an electroextraction method. A relationship between analytical values of these contents and the iron loss $W_{10/400}$ is organized and shown in FIG. 3, which shows that the iron loss can be suppressed from increasing when the amount of $N_s$ present as AlN in the 1/20-sheet-thickness layer is suppressed from increasing, specifically, when the content of N ($N_s$ and Nt) present as AlN in the steel sheet and the sheet thickness t (mm) satisfies the following Formula (1):

$$(t \times N_t) \div \{(t/10) \times N_s\} \geq 5 \cdots (1)$$

The present inventors have conducted experiments to explore a method for preventing nitriding in finish annealing and mitigating the precipitation of fine nitrides AlN.

One possible method for inhibiting nitriding is to reduce the nitrogen content in the atmosphere inside the annealing furnace. However, reducing the nitrogen content in the atmosphere in the heating zone hinders the formation of a stable alumina layer on the surface of the steel sheet. As a result, nitriding of the surface layer of the steel sheet in the soaking zone is conversely promoted, which may lead to deterioration of the magnetic properties or to appearance failures, such as surface defects, due to pick-up on the rolls in the furnace being promoted. Thus, it is considered necessary to contain a certain amount of nitrogen in at least the atmosphere in the heating zone of the annealing furnace. Accordingly, in the experiments to be described below, the nitrogen content in the furnace atmosphere in the heating zone was controlled to 80 vol%.

<Experiment 2>

First, the following experiment was conducted to examine the influence of a nitrogen partial pressure in the furnace atmosphere during the finish annealing on the magnetic properties.

A steel material (slab) having an ingredient composition including C: 0.0021 mass%, Si: 3.7 mass%, Mn: 0.4 mass%, P: 0.01 mass%, S: 0.0016 mass%, Al: 0.6 mass%, N: 0.0022 mass%, Ti: 0.0014 mass%, Nb: 0.0010 mass%, and O: 0.0025 mass%, with the rest being Fe and unavoidable impurities was hot-rolled into a hot-rolled sheet having a sheet thickness of 1.8 mm. The hot-rolled sheet was subjected to hot-band annealing at 900°C for 30 seconds, pickled, and then cold-rolled into a cold-rolled sheet having a final sheet thickness of 0.25 mm. The cold-rolled sheet was then subjected to finish annealing with the furnace atmosphere in the soaking zone set to an atmosphere of a mixed gas of $H_2$ and $N_2$, while the content of $N_2$ was varied within a range of 0 to 100 vol%. The dew point of the furnace atmosphere was controlled to -55°C (constant).

A test specimen measuring 180 mm in length and 30 mm in width was cut out from the finish-annealed steel sheet, with the longitudinal direction in the L direction (rolling direction) and with the longitudinal direction in the C direction (perpendicular to rolling direction), and iron loss $W_{10/400}$ was measured by the Epstein test. The results are shown in FIG. 4. From this graph, it can be seen that reducing the partial pressure of nitrogen in the furnace atmosphere in the soaking zone to 30 vol% or less can prevent nitriding and the increase in iron loss.

<Experiment 3>

The following experiment was conducted to examine a temperature region where nitriding occurs in finish annealing.

A steel material (slab) having an ingredient composition including C: 0.0021 mass%, Si: 3.7 mass%, Mn: 0.4 mass%, P: 0.01 mass%, S: 0.0016 mass%, Al: 0.6 mass%, N: 0.0022 mass%, Ti: 0.0014 mass%, Nb: 0.0010 mass%, and O: 0.0025 mass%, with the rest being Fe and unavoidable impurities was hot-rolled into a hot-rolled sheet having a sheet thickness of 1.8 mm. The hot-rolled sheet was subjected to hot-band annealing at 900°C for 30 seconds, pickled, and then cold-rolled into a cold-rolled sheet having a final sheet thickness of 0.25 mm. The cold-rolled sheet was then subjected to finish annealing by holding the steel sheet at a soaking temperature for 10 seconds while varying the soaking temperature within a range of 800 to 1050°C, with the furnace atmosphere in the soaking zone set to a mixed gas atmosphere of $H_2$:$N_2$ = 20:80 as a vol% ratio (dew point: -55°C) in which nitriding occurs.

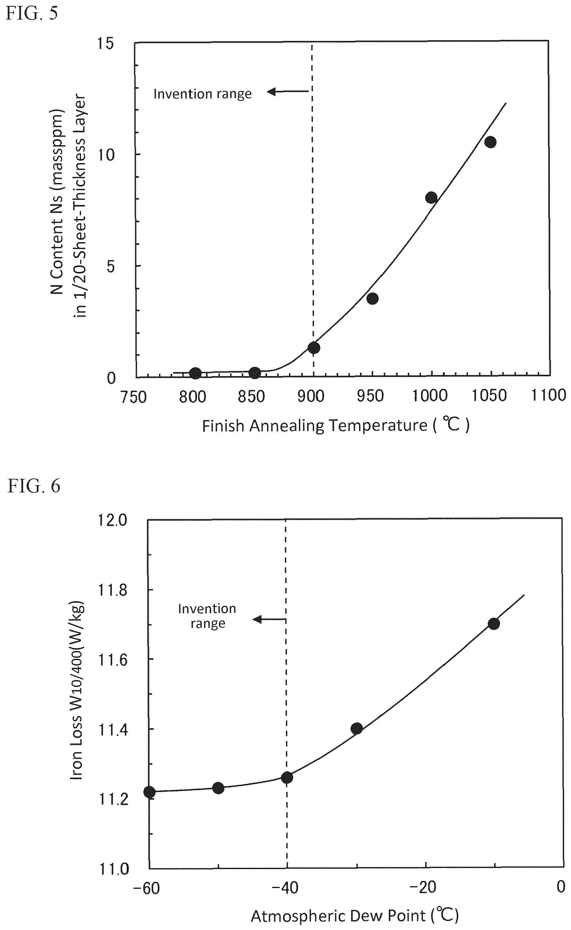

A test specimen was cut out from each finish-annealed steel sheet, and the content $N_s$ (mass%) of N present as AlN (N as AlN) in the 1/20-sheet-thickness layer was analyzed by an electroextraction method. The results are shown in FIG. 5 as a relationship between the finish annealing temperature and $N_s$. From this graph, it was found that the temperature region in which the nitrogen partial pressure needed to be reduced to prevent nitriding during finish annealing was 900°C or higher.

<Experiment 4>

The following experiment was conducted to examine the influence of the dew point of the furnace atmosphere during finish annealing on the magnetic properties.

A steel material (slab) having an ingredient composition including C: 0.0021 mass%, Si: 3.7 mass%, Mn: 0.4 mass%, P: 0.01 mass%, S: 0.0016 mass%, Al: 0.6 mass%, N: 0.0022 mass%, Ti: 0.0014 mass%, Nb: 0.0010 mass%, and O: 0.0025 mass%, with the rest being Fe and unavoidable impurities was hot-rolled into a hot-rolled sheet having a sheet thickness of 1.8 mm. The hot-rolled sheet was subjected to hot-band annealing at 900°C for 30 seconds, pickled, and then cold-rolled into a cold-rolled sheet having a final sheet thickness of 0.25 mm. The cold-rolled sheet was then subjected to finish annealing at 1000°C for 10 seconds. In the process, the furnace atmosphere was set to 100% Ar in a region where the temperature of the furnace atmosphere was 900°C or higher, while the dew point was varied within a range of -60 to -10°C.

A test specimen measuring 180 mm in length and 30 mm in width was cut out from each finish-annealed steel sheet, with the longitudinal direction in the L direction (rolling direction) and with the longitudinal direction in the C direction (perpendicular to rolling direction), and iron loss $W_{10/400}$ was measured by the Epstein test. The results are shown in FIG. 6 as a relationship between the dew point and the iron loss. From this graph, it can be seen that, to prevent an increase in iron loss due to nitriding, the dew point of the furnace atmosphere in the region where the temperature of the furnace atmosphere is 900°C or higher needs to be controlled to -40°C or lower.

<Experiment 5>

The present inventors conducted the following experiment to examine the influence of cooling strain introduced during cooling as one of the factors other than the atmosphere that may adversely affect the iron loss properties in finish annealing.

A steel material (slab) having an ingredient composition including C: 0.0021 mass%, Si: 3.7 mass%, Mn: 0.4 mass%, P: 0.01 mass%, S: 0.0016 mass%, Al: 0.6 mass%, Ti: 0.0014 mass%, Nb: 0.0010 mass%, O: 0.0025 mass%, and N: 0.0022 mass%, with the rest being Fe and unavoidable impurities was hot-rolled into a hot-rolled sheet having a sheet thickness of 1.8 mm. The hot-rolled sheet was subjected to hot-band annealing at 900°C for 30 seconds, pickled, and then cold-rolled into a cold-rolled sheet having a final sheet thickness of 0.25 mm. The cold-rolled sheet was then subjected to finish annealing including a soaking process at 1000°C for 30 seconds and cooling, with the furnace atmosphere in the temperature region of 900°C or higher set to $H_2$:$N_2$ = 20:80 (dew point: -55°C) in which nitriding occurs. In the process, the average cooling rate from the soaking temperature of 1000°C to 900°C was varied within a range of 10 to 15°C/s. The reason for setting the temperature region in which the cooling rate was to be varied to the temperature region of 900°C or higher is that the cooling rate in this temperature region is considered to have a significant influence on cooling strain.

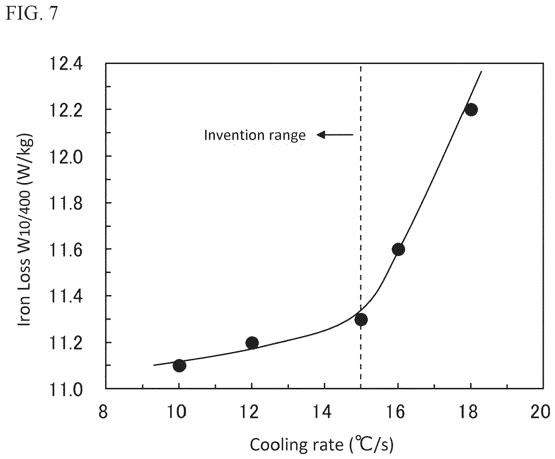

A test specimen measuring 180 mm in length and 30 mm in width was cut out from each finish-annealed steel sheet, with the longitudinal direction in the L direction (rolling direction) and with the longitudinal direction in the C direction (perpendicular to rolling direction), and each iron loss $W_{10/400}$ was measured by the Epstein test. The results are shown in FIG. 7 as a relationship with the cooling rate. From this graph, it can be seen that controlling the average cooling rate in the temperature region of 900°C or higher to 15°C/s or less can prevent the increase in iron loss due to cooling strain.

Next, the ingredient composition of the steel material (slab) used to produce the non-oriented electrical steel sheet of the present invention will be described.

It is preferable that the slab used to produce the non-oriented electrical steel sheet of the present invention contain, as basic ingredients, Si: 2.8 to 6.5 mass%, Mn: 0.1 to 2.0 mass%, and Al: 0.3 to 2.0 mass%.

Further, for the purpose of improving the magnetic properties and the mechanical properties, the slab may contain at least one element selected from: P: 0.10 mass% or less, Sn: 0.005 to 0.20 mass%, Sb: 0.005 to 0.20 mass%, Ca: 0.0005 to 0.020 mass%, Mg: 0.0005 to 0.020 mass%, REM: 0.0005 to 0.020 mass%, Cr: 0.01 to 1.0 mass%, Co: 0.01 to 1.0 mass%, Ni: 0.01 to 1.0 mass%, Cu: 0.01 to 1.0 mass%, Mo: 0.001 to 0.1 mass%, and W: 0.001 to 0.1 mass%.

C, S, N, Ti, Nb, and O are harmful elements that adversely affect the magnetic properties by forming carbonitrides to be precipitated, forming oxides, or forming sulfides. Therefore, it is preferable to limit these elements as follows: C: 0.0050 mass% or less, S: 0.0050 mass% or less, N: 0.0050 mass% or less, Ti: 0.0030 mass% or less, Nb: 0.0030 mass% or less, and O: 0.0050 mass% or less.

Next, the production method of the non-oriented electrical steel sheet of the present invention will be described.

The non-oriented electrical steel sheet of the present invention can be produced by a conventional known production process as follows: A steel material (slab) having the above-described ingredient composition is hot-rolled into a hot-rolled-sheet, and the hot-rolled sheet is subjected to hot-band annealing, if necessary, and then to one cold rolling or two or more cold rollings with intermediate annealing between each cold rolling to obtain a cold-rolled sheet having a final sheet thickness (product sheet thickness). Next, the cold-rolled sheet is subjected to finish annealing, and an insulation coating is formed thereon as necessary. In the following, the production method will be specifically described.

The slab serving as the material of the non-oriented electrical steel sheet can be produced by melting steel having the above-described ingredient composition complying with the present invention by a commonly known refining process that uses a converter, an electric furnace, a vacuum degassing device, etc., and then performing a usual continuous casting method or an ingot-making blooming method, or can be formed into a thin cast slab with a thickness of 100 mm or less by a direct casting method.

The slab is then hot-rolled into a hot-rolled sheet using a commonly known method and conditions. The slab is usually hot-rolled after being heated to a predetermined temperature in a heating furnace, but may be hot-rolled immediately after casting, without being reheated. In the case of a thin cast slab, it may be hot-rolled, or may be subjected to the subsequent steps without being hot rolling.

The hot-rolled sheet having been hot-rolled is subjected to hot-band annealing, if necessary. It is preferable to perform the hot-band annealing under soaking conditions of 800 to 1 100°C for 180 seconds or less. When the soaking temperature is lower than 800°C, the effect of hot-band annealing is too small to sufficiently achieve a magnetic property improving effect. On the other hand, when the soaking temperature exceeds 1 100°C and the soaking time exceeds 180 seconds, the crystal grains are coarsened to facilitate brittle failure (sheet fracture) during cold rolling or impair productivity, which is disadvantageous in terms of the production cost. More preferable conditions are 850 to 1000°C for 60 seconds or less.

It is preferable to set the dew point of the atmosphere in the heating zone and the soaking zone in the hot-band annealing to 0°C or higher but not higher than 70°C. When the dew point is lower than 0°C, an oxidized layer formed on the surface of the steel sheet during annealing is likely to be removed during pickling, so that nitriding may be promoted during finish annealing at a later stage and the magnetic properties may deteriorate. On the other hand, when the dew point exceeds 70°C, conversely, an oxidized film that is difficult to remove by pickling is formed during annealing, which hinders the pickling efficiency or increases the load of cold rolling, thereby impairing productivity.

The steel sheet after the hot rolling or hot-band annealing is then formed into a cold-rolled sheet with a final sheet thickness by one cold rolling or two or more cold rollings with intermediate annealing between each cold rolling. It is preferable that the final sheet thickness, i.e., the product sheet thickness, be 0.30 mm or less, from the viewpoint of reducing the iron loss.

The cold-rolled sheet is subjected to finish annealing, which is the most important step in the present invention, and, if necessary, an insulation coating is applied thereto to obtain a product sheet. It is preferable that the soaking temperature in this finish annealing be within a range of 900 to 1200°C from the viewpoint of allowing the crystal grains to grow large and reducing the iron loss. When the soaking temperature is lower than 900°C, the crystal grains do not grow sufficiently, while when the soaking temperature exceeds 1200°C, the crystal grains coarsen excessively or a disadvantage in terms of the heat energy cost is caused. A more preferable range is 1000 to 1100°C. The influence of the soaking temperature on the grain growth during finish annealing is substantially predominant, while the influence of the soaking time is minor. Therefore, the soaking time can be adjusted according to the length of the annealing furnace or the productivity taken into account.

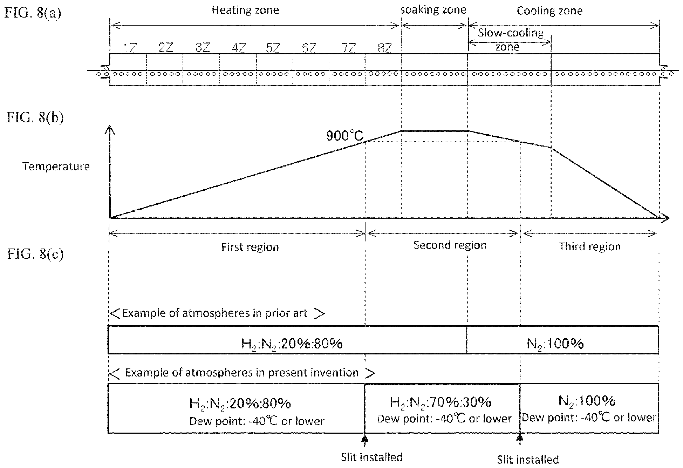

FIG. 8 is a view illustrating the finish annealing conditions of the present invention, with FIG. 8(a) at the top showing an example of the finish annealing facility having a horizontal continuous annealing furnace composed of a heating zone, a soaking zone, and a cooling zone, and FIG. 8(b) showing an example of the heat pattern in this finish annealing facility.

The present invention is characterized in that the continuous annealing furnace shown in FIG. 8 is divided into the following three regions in the order in which a steel sheet is threaded: a "first region" where the furnace atmosphere temperature in the heating zone is lower than 900°C; a "second region" where the furnace atmosphere temperature in the heating zone, the soaking zone, and the cooling zone is 900°C or higher; and a "third region" where the furnace atmosphere temperature in the cooling zone is lower than 900°C, and in that the atmosphere in each region is controlled as described later.

Here, it is important in the present invention that the furnace atmosphere of the continuous annealing furnace needs to be appropriately controlled from the viewpoint of preventing nitriding of the surface of the steel sheet that occurs during finish annealing. In particular, it is necessary to set the furnace atmosphere in the second region, i.e., the temperature region where the atmospheric temperature is 900°C or higher, to an atmosphere of one type of gas among $N_2$, $H_2$, and a rare gas or an atmosphere of a mixed gas of two or more types of these gases, and to set the nitrogen content in the atmosphere to 30 vol% or less. For example, the atmosphere of a mixed gas of $H_2:N_2 = 80:20$ as a vol% ratio is preferable. Further, from the viewpoint of preventing nitriding and oxidation, the dew point of the atmosphere needs to be set to -40°C or lower. The nitrogen content is preferably 20 vol% or less, and the dew point is preferably -50°C or lower. Since the dew point of a gas that can be supplied as an industrial gas is about -60°C, the lower limit of the dew point is necessarily about -60°C.

FIG. 8 (c) is a view showing the furnace atmospheres in the heat pattern of the finish annealing facility shown in FIGs. 8(a) and 8(b) at the top, as a comparison between the present invention and the prior art. As shown in this view, in the prior art, the atmosphere in the heating zone and the soaking zone is set to an atmosphere of a mixed gas of $H_2:N_2 = 20:80$ as a vol% ratio and the cooling zone is set to an atmosphere of an $N_2$ gas, while in the present invention, irrespective of the division among the heating zone, the soaking zone, and the cooling zone, the furnace atmosphere in the region where the furnace atmosphere temperature is 900°C or higher is set to an atmosphere satisfying the above-described conditions that the nitrogen content is 30 vol% or less and that the dew point is -40°C or lower.

In the present invention, it is preferable that, in the cooling zone at a later stage which is included as a part of the second region, the cooling rate from the soaking temperature to 900°C be controlled to 15°C/s or less. As described above, when the cooling rate exceeds 15°C/s, the iron loss increases due to cooling strain. A more preferable cooling rate is 10°C/s or less.

Further, in the present invention, it is preferable that the first region located upstream of the second region, i.e., the region where the furnace atmosphere temperature in the heating zone is lower than 900°C, be set to have an atmosphere having a nitrogen content of 80 vol% or more and a dew point of -40°C or lower. This is from the viewpoint of forming an alumina layer on the steel sheet surface which functions to prevent nitriding in the subsequent temperature region of 900°C or higher (second region) or prevent pick-up on the rolls in the furnace. A more preferable nitrogen content is 90 vol% or more.

It is desirable that the heating rate of the steel sheet in the first region of the finish annealing facility of the present invention be set to 100°C/s or more. This is because, when the heating rate is 100°C/s or more, the priority of recrystallization in the {111} orientation decreases, causing the orientation of recrystallized grains to become random, which has an enhancing effect on the magnetic flux density. On the other hand, a high heating rate that is too high raises concerns such as that, as the shape of the steel sheet cannot be corrected, the magnetic properties may deteriorate due to strain, or that heating unevenness may occur in the sheet width direction, resulting in larger variation in the iron loss value in the sheet width direction. Therefore, it is preferable that the upper limit of the heating rate be about 300°C/s.

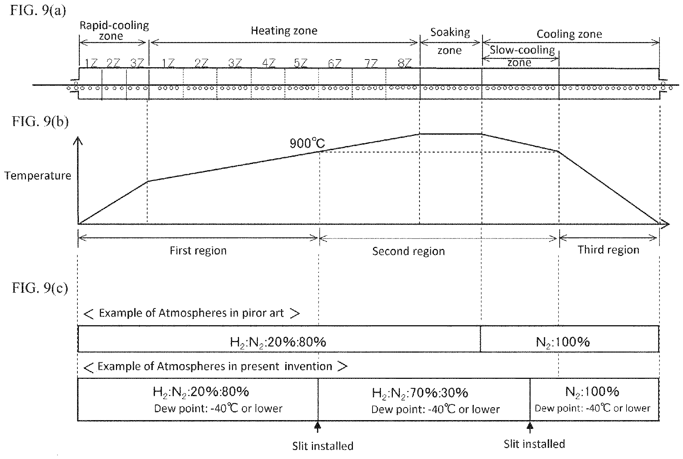

In the case where the heating rate of the steel sheet in the first region is set to 100°C/s or more, it is desirable that, as shown in FIG. 9 (a), the first region of the finish annealing facility be composed of a rapid heating zone and a heating zone in which the heating rate is lower than that in the rapid heating zone. It is preferable that rapid heating in the rapid heating zone be up to 700°C to 750°C, which is the Curie point of the steel sheet, and that thereafter the steel sheet be heated to 900°C at a lower rate than in the rapid heating zone. The reducing effect that rapid heating has on the priority of recrystallization in the {111}orientation is more pronounced in a cold-rolled sheet that has not been subjected to hot-band annealing than in a cold-rolled sheet that has been subjected to hot-band annealing. Therefore, it is preferable to apply rapid heating to the latter.

In the third region following the second region, i.e., the cooling zone in which the furnace atmosphere temperature is lower than 900°C, since there is little risk of introducing cooling strain or nitriding, the atmosphere and the cooling rate are not particularly limited, and rapid cooling may be performed in a 100% nitrogen gas atmosphere, for example.

As has been described above, the finish annealing facility of the present invention requires the annealing furnace to be divided into the first region, the second region, and the third region with the temperature of the furnace atmosphere of 900°C as the boundaries, where the gas composition and the dew point of the atmosphere need to be individually controlled in each region. Therefore, it is preferable that the annealing furnace be divided into a plurality of segments in the forward direction of the steel sheet as shown in FIG. 8 (a) and FIG. 9 (a), and that the atmosphere be controllable for each segment.

Since an $H_2$ gas has good heat transfer properties, including an $H_2$ gas in the atmospheric gas in the second region has the effect of reducing cooling unevenness in the sheet thickness direction during cooling and thereby reducing deterioration of the magnetic properties due to cooling strain. However, since an $H_2$ gas is an explosive gas, it is preferable to prevent the gas from flowing into the first region or the third region where the temperature is lower than 900°C. From this viewpoint, it is preferable to provide an inter-zone seal (slit) between the first region and the second region and between the second region and the third region as shown in FIG. 8 (c) and FIG. 9 (c).

Example 1

An example in which a finish annealing facility of the present invention was applied to the production of a non-oriented electrical steel sheet of the present invention will be described below.

Steel sheets after cold rolling (cold-rolled sheets) for non-oriented electrical steel sheets having ingredient compositions containing the ingredients shown in Table 1, with the rest being Fe and unavoidable impurities, were threaded through an annealing facility having a horizontal continuous annealing furnace composed of the heating zone, the soaking zone, and the cooling zone shown in FIG. 8 (a), and were subjected to finish annealing. The finish annealing conditions are shown in Table 1. The gas composition and dew point of the atmosphere of each of the first region (the heating zone in which the atmospheric temperature is lower than 900°C), the second region (the heating zone, the soaking zone, and the cooling zone in which the atmospheric temperature is 900°C or higher), and the third region (the cooling zone in which the atmospheric temperature is lower than 900°C) of the annealing furnace were varied, as well as the soaking conditions (the soaking temperature and the soaking time) and the cooling rate from the soaking temperature to 900°C in the second region were varied.

A test specimen was taken from each finish-annealed steel sheet thus obtained, and the content $N_s$ (mass%) of N present as AlN (N as AlN) in the 1/20-sheet-thickness layer and the content Nt (mass%) of N present as AlN (N as AlN) across the entire sheet thickness were analyzed by an electroextraction method. Further, a test specimen measuring 180 mm in length and 30 mm in width was cut out from each finish-annealed steel sheet, with the longitudinal direction in the L direction (rolling direction) and with the longitudinal direction in the C direction (perpendicular to rolling direction), and iron loss $W_{10/400}$ was measured by the Epstein test.

The measurement results are also shown in Table 1. The standard iron loss values shown in Table 1 are the upper limit values of iron loss required for each steel sheet. Since the iron loss depends largely on the sheet thickness, the required iron loss value varies according to the sheet thickness. Therefore, the standard iron loss values were calculated using the following Formula:

$$W_{10/400} \ (W/kg) = 8 + 20 \ t,$$

where t is the sheet thickness (mm).

The results show that when the finish annealing facility of the present invention is applied to the production of a non-oriented electrical steel sheet and finish annealing satisfying the conditions of the present invention is performed, nitriding in finish annealing is inhibited, so that a non-oriented electrical steel sheet with low iron loss can be stably produced.

[Table 1]

| Steel sheet No | Steel sheet ingredients (mass%) | | | Final thickness t (mm) | Finish annealing conditions | | | | | | | | | | | N as AlN (mass%) after finish annealing | | | Magnetic properties | | Remarks |
|---|---|---|---|---|---|---|---|---|---|---|---|---|---|---|---|---|---|---|---|---|---|
| | | | | | First region (heating zone lower than 900°C) | | Second region (heating zone, soaking zone, and cooling zone of 900°C or higher) | | | | | | Third region (cooling zone lower than 900°C) | | | 1/20-layer $N_s$ | Entire thickness $N_t$ | Left side of Formula (1) *1 | Iron loss $W_{10/400}$ (W/kg) | *2 | |
| | | | | | Atmospheric gas | | Soaking temp. (°C) | Soaking time (sec) | Atmospheric gas | | Cooling rate (°C/s) | Atmospheric gas | | | | | | | | |
| | Si | Mn | Al | | Composition (vol% raio) | Dew point (°C) | | | Composition (vol% ratio) | Dew point (°C) | | Composition (vol% ratio) | Dew point (°C) | | | | | | | |
| 1 | 3.7 | 0.4 | 0.6 | 0.25 | H2:N2=20:80 | -50 | 900 | 10 | H2:N2=70:30 | -50 | 8 | N2=100% | -50 | 0.0002 | 0.0002 | 10.0 | 11.5 | 13.0 | Invention Example |
| 2 | 3.7 | 0.4 | 0.6 | 0.25 | H2:N2=20:80 | -50 | 1050 | 10 | H2:N2=70:30 | -50 | 12 | N2=100% | -50 | 0.0002 | 0.0003 | 15.0 | 11.2 | 13.0 | Invention Example |
| 3 | 3.7 | 0.4 | 0.6 | 0.30 | H2:N2=20:80 | -50 | 1000 | 10 | H2:N2=70:30 | -50 | 10 | N2=100% | -50 | 0.0003 | 0.0004 | 13.3 | 11.8 | 14.0 | Invention Example |
| 4 | 3.7 | 0.4 | 0.6 | 0.30 | H2:N2=20:80 | -50 | 1000 | 10 | H2:N2=20:80 | -50 | 10 | N2=100% | -50 | 0.0010 | 0.0004 | 4.0 | 14.5 | 14.0 | Comparative Example |
| 5 | 3.7 | 0.4 | 0.6 | 0.30 | H2:N2=20:80 | -50 | 1000 | 10 | H2:N2=70:30 | -50 | 16 | N2=100% | -50 | 0.0004 | 0.0003 | 7.5 | 12.6 | 14.0 | Invention Example |
| 6 | 3.7 | 0.4 | 0.6 | 0.30 | H2:N2=20:80 | -50 | 1000 | 10 | H2:N2=70:30 | -30 | 10 | N2=100% | -50 | 0.0005 | 0.0002 | 4.0 | 14.4 | 14.0 | Comparative Example |
| 7 | 3.7 | 0.4 | 0.6 | 0.30 | H2:N2=20:80 | -50 | 1000 | 10 | H2:N2=60:40 | -50 | 12 | N2=100% | -50 | 0.0009 | 0.0004 | 4.4 | 14.8 | 14.0 | Comparative Example |
| 8 | 3.7 | 0.4 | 0.6 | 0.30 | H2:N2=20:80 | -50 | 1000 | 10 | H2:N2=80:20 | -50 | 12 | N2=100% | -50 | 0.0002 | 0.0002 | 10.0 | 11.4 | 14.0 | Invention Example |
| 9 | 3.7 | 0.4 | 0.6 | 0.30 | H2:N2=20:80 | -50 | 1000 | 10 | H2:N2=70:30 | -40 | 12 | N2=100% | -50 | 0.0003 | 0.0005 | 16.7 | 11.0 | 14.0 | Invention Example |
| 10 | 3.7 | 0.4 | 0.6 | 0.30 | H2:N2=20:80 | -50 | 1000 | 10 | H2:N2=70:30 | -50 | 15 | N2=100% | -50 | 0.0002 | 0.0003 | 15.0 | 11.3 | 14.0 | Invention Example |

| Steel sheet No | Steel sheet ingredients (mass%) | | | Final thickness t (mm) | Finish annealing conditions | | | | | | | | | N as AlN(mass%) after finish annealing | | | Magnetic properties | | Remarks |
|---|---|---|---|---|---|---|---|---|---|---|---|---|---|---|---|---|---|---|---|
| | | | | | First region (heating zone lower than 900°C) | | Second region (heating zone, soaking zone, and cooling zone of 900°C or higher) | | | | | | Third region (cooling zone lower than 900°C) | | | | | | | |
| | | | | | Atmospheric gas | | Soaking temp. (°C) | Soaking time (sec) | Atmospheric gas | | Cooling rate (°C/s) | Atmospheric gas | | $1/20$-layer $N_s$ | Entire thickness $N_t$ | Left side of Formula (1) *1 | Iron loss $W_{10/400}$ (W/kg) | *2 | |
| | Si | Mn | Al | | Composition (vol% raio) | Dew point (°C) | | | Composition (vol% ratio) | Dew point (°C) | | Composition (vol% ratio) | Dew point (°C) | | | | | | |
| 11 | 3.7 | 0.4 | 0.6 | 0.30 | H2:N2=40:60 | -50 | 1000 | 10 | H2:N2=70:30 | -50 | 12 | N2=100% | -50 | 0.0003 | 0.0002 | 6.7 | 12.8 | 14.0 | Invention Example |
| 12 | 3.7 | 0.4 | 0.6 | 0.30 | H2:N2=40:60 | -50 | 1000 | 10 | H2:N2=70:30 | -50 | 16 | N2=100% | -50 | 0.0009 | 0.0005 | 5.6 | 13.5 | 14.0 | Invention Example |
| 13 | 3.3 | 1.6 | 0.55 | 0.25 | H2:N2=20:80 | -50 | 940 | 10 | H2:N2=70:30 | -50 | 10 | N2=100% | -50 | 0.0003 | 0.0002 | 10.0 | 12.2 | 13.0 | Invention Example |
| 14 | 3.4 | 0.5 | 0.7 | 0.27 | H2:N2=20:80 | -50 | 980 | 10 | H2:N2=70:30 | -50 | 10 | N2=100% | -50 | 0.0003 | 0.0002 | 6.7 | 12.0 | 13.4 | Invention Example |
| 15 | 2.8 | 0.5 | 0.9 | 0.30 | H2:N2=20:80 | -50 | 980 | 10 | H2:N2=70:30 | -50 | 10 | N2=100% | -50 | 0.0004 | 0.0003 | 7.5 | 13.5 | 14.0 | Invention Example |

*1: Left side of Formula (1) = $(t \times N_t) \div \{(t/10) \times N_s\}$

*2: Standard iron loss value $W_{10/400} = 8 + 20\,t$ (t: sheet thickness (mm))

EP 4 414 465 A1

Example 2

Eight coils of steel sheets after cold rolling (cold-rolled sheets) produced in Example 1 were prepared, each having a sheet thickness of 0.25 mm and an ingredient composition containing Si: 3.7 mass%, Mn: 0.4 mass%, and Al: 0.6 mass%, with the rest being Fe and unavoidable impurities. Of these coils, four coils were threaded through the annealing facility shown in FIG. 8 and subjected to finish annealing under the same conditions as the steel sheets No. 1 to 4 in Table 1 of Example 1. The other four coils were threaded through the annealing facility shown in FIG. 9 in which the rapid heating zone is provided in the first region, and were subjected to finish annealing under the same conditions as the aforementioned four coils except that rapid heating was performed. Details of these finish annealing conditions are shown in Table 2.

A test specimen was extracted from each finish-annealed steel sheet thus obtained, and the content $N_s$ (mass%) of N present as AlN (N as AlN) in the 1/20-sheet-thickness layer and the content Nt (mass%) of N present as AlN (N as AlN) across the entire sheet thickness were analyzed by an electroextraction method. Further, a test specimen measuring 180 mm in length and 30 mm in width, with the longitudinal direction in the L direction (rolling direction) and with the longitudinal direction in the C direction (perpendicular to rolling direction) was cut out from each finish-annealed steel sheet, and iron loss $W_{10/400}$ and magnetic flux density $B_{50}$ were measured by the Epstein test.

The measurement results are also shown in Table 2. The results show that when rapid heating is performed in the heating process of finish annealing using the annealing facility having the rapid heating zone provided in the first region, the magnetic flux density can be further enhanced than when rapid heating is not performed.

[Table 2]

| Steel sheet № | Anneal-ing facili-ty | First region (heating zone lower than 900°C) | | | | Second region (heating zone, soaking zone, and cooling zone of 900°C or higher) | | | | | Third region (cooling zone lower than 900°C) | | N as AlN (mass%) after finish annealing | | | Magnetic properties | | | Re-marks |
| | | Rapid heating zone | | Atmospheric gas | | Soak-ing temp. (°C) | Soak-ing time (sec) | Atmospheric gas | | Coolin g rate (°C /s) | Atmospheric gas | | 1/20-layer $N_s$ | Entire thick-ness Nt | Left side of Formula (1) *1 | Iron loss $W_{10/400}$ (W/kg) | *2 | Magnet-ic Flux density $B_{50}$(T) | |
| | | Heat-ing rate (°C /s) | End emp. (°C) | Composition (vol% ratio) | Dew point (°C) | | | Composition (vol% ratio) | Dew point (°C) | | Composition (vol% ratio) | Dew point (°C) | | | | | | | |
| 16 | FIG. 8 | - | - | H2:N2=20:80 | -50 | 900 | 10 | H2:N2=70:30 | -50 | 8 | N2=100% | -50 | 0.0002 | 0.0002 | 10.0 | 11.5 | 13.0 | 1.655 | Inven-tion Ex-ample |
| 17 | FIG. 9 | 100 | 750 | H2:N2=20:80 | -50 | 900 | 10 | H2:N2=70:30 | -50 | 8 | N2=100% | -50 | 0.0002 | 0.0002 | 10.0 | 11.4 | 13.0 | 1.661 | Inven-tion Ex-ample |
| 18 | FIG. 8 | - | - | H2:N2=20:80 | -50 | 1050 | 10 | H2:N2=70:30 | -50 | 12 | N2=100% | -50 | 0.0002 | 0.0003 | 15.0 | 11.2 | 13.0 | 1.653 | Inven-tion Ex-ample |
| 19 | FIG. 9 | 200 | 750 | H2:N2=20:80 | -50 | 1050 | 10 | H2:N2=70:30 | -50 | 12 | N2=100% | -50 | 0.0002 | 0.0003 | 15.0 | 11.3 | 13.0 | 1.659 | Inven-tion Ex-ample |
| 20 | FIG. 8 | - | - | H2:N2=20:80 | -50 | 1000 | 10 | H2:N2=70:30 | -50 | 10 | N2=100% | -50 | 0.0003 | 0.0004 | 13.3 | 11.8 | 14.0 | 1.655 | Inven-tion Ex-ample |
| 21 | FIG. 9 | 150 | 700 | H2:N2=20:80 | -50 | 1000 | 10 | H2:N2=70:30 | -50 | 10 | N2=100% | -50 | 0.0003 | 0.0004 | 13.3 | 11.9 | 14.0 | 1.662 | Inven-tion Ex-ample |
| 22 | FIG. 8 | - | - | H2:N2=20:80 | -50 | 1000 | 10 | H2:N2=70:30 | -50 | 16 | N2=100% | -50 | 0.0004 | 0.0003 | 7.5 | 12.6 | 14.0 | 1.654 | Inven-tion Ex-ample |

(continued)

| Steel sheet № | Anneal-ing facili-ty | Finish annealing conditions | | | | | | | | | | | | N as AlN (mass%) after finish annealing | | | Magnetic properties | | | Remarks |
|---|---|---|---|---|---|---|---|---|---|---|---|---|---|---|---|---|---|---|---|---|
| | | First region (heating zone lower than 900°C) | | | | Soak-ing temp. (°C) | Soak-ing time (sec) | Second region (heating zone, soaking zone, and cooling zone of 900°C or higher) | | | Cooling rate (°C /s) | Third region (cool-ing zone lower than 900°C) | | 1/20-layer $N_s$ | Entire thick-ness Nt | Left side of Formula (1) *1 | Iron loss $W_{10/400}$ (W/kg) | *2 | Magnet-ic Flux density $B_{50}$(T) | |
| | | Rapid heating zone | | Atmospheric gas | | | | Atmospheric gas | | | | Atmospheric gas | | | | | | | | |
| | | Heat-ing rate (°C /s) | End emp. (°C) | Composition (vol% ratio) | Dew point (°C) | | | Composition (vol% ratio) | Dew point (°C) | | | Composition (vol% ratio) | Dew point (°C) | | | | | | | |
| 23 | FIG. 9 | 250 | 700 | H2:N2=20:80 | -50 | 1000 | 10 | H2:N2=70:30 | -50 | 16 | N2=100% | -50 | 0.0004 | 0.0003 | 7.5 | 12.4 | 14.0 | 1.660 | Inven-tion Ex-ample |

*1: Left side of Formula (1) = $(t \times N_t) \div \{(t/10) \times N_s\}$
*2: Standard iron loss value $W_{10/400}$ = 8 + 20 t (t: sheet thickness (mm))

13

EP 4 414 465 A1

Industrial Applicability

The technology of the present invention can be applied to the production of not only iron core materials of drive motors of HEVs, EVs, and FCEVs but also iron core materials of motors of compressors of air conditioners, machine tools, high-speed generators, vacuum cleaners, and others.

**Claims**

1. A finish annealing facility for producing an electrical steel sheet in which a steel sheet after cold rolling is sequentially threaded through an annealing furnace having at least a first region, a second region, and a third region so as to continuously undergo finish annealing,
   **characterized in that:**

   each of the regions of the annealing furnace is independently controllable in terms of a gas composition and dew point of an atmosphere; and
   the second region is composed of a heating zone, a soaking zone, and a cooling zone all having atmospheric temperatures of 900°C or higher, with an atmospheric gas controlled to have a nitrogen content of 30 vol% or less and a dew point of -40°C or lower.

2. The finish annealing facility according to claim 1, wherein,
   in the cooling zone constituting a part of the second region, a cooling rate of the steel sheet is controlled to 15°C/s or less.

3. The finish annealing facility according to claim 1 or 2, wherein
   the first region is a heating zone having an atmospheric temperature lower than 900°C, with a nitrogen content in an atmospheric gas controlled to 80 vol% or more.

4. A finish annealing method of an electrical steel sheet, **characterized in that** a steel sheet after cold rolling is subjected to finish annealing using the annealing facility according to any one of claims 1 to 3.

5. A production method of an electrical steel sheet, **characterized in that** a steel sheet after cold rolling is subjected to finish annealing using the annealing facility according to any one of claims 1 to 3.

6. A non-oriented electrical steel sheet, **characterized in that**, when a content of nitrogen present as AlN in a layer of 1/20 of a sheet thickness of the steel sheet from one side surface is $N_s$ (mass%), a content of nitrogen present as AlN across the entire sheet thickness is $Nt$ (mass%), and the sheet thickness of the steel sheet is $t$ (mm), $N_s$, $Nt$, and $t$ satisfy the following Formula (1):

$$(t \times N_t) \div \{(t/10) \times N_s\} \geq 5 \cdots (1)$$

FIG. 1

FIG. 2

FIG. 3

FIG. 4

FIG. 5

FIG. 6

FIG. 7

FIG. 8(a)

FIG. 8(b)

FIG. 8(c)

FIG. 9(a)

| Rapid-cooling zone | Heating zone | Soaking zone | Cooling zone |

1Z 2Z 3Z  1Z  2Z  3Z  4Z  5Z  6Z  7Z  8Z

Slow-cooling zone

FIG. 9(b)

Temperature

900°C

First region | Second region | Third region

FIG. 9(c)

< Example of Atmospheres in piror art >

| $H_2$:$N_2$:20%:80% | $N_2$:100% |

< Example of Atmospheres in present invention >

| $H_2$:$N_2$:20%:80%<br>Dew point: -40°C or lower | $H_2$:$N_2$:70%:30%<br>Dew point: -40°C or lower | $N_2$:100%<br>Dew point: -40°C or lower |

Slit installed          Slit installed

## INTERNATIONAL SEARCH REPORT

| International application No. |
| --- |
| **PCT/JP2022/038167** |

| A. | CLASSIFICATION OF SUBJECT MATTER |
| --- | --- |

*C21D 8/12*(2006.01)i; *C21D 9/46*(2006.01)i; *C21D 9/56*(2006.01)i; *C22C 38/00*(2006.01)n; *C22C 38/06*(2006.01)n; *C22C 38/60*(2006.01)n; *H01F 1/147*(2006.01)i
FI: C21D9/46 501A; C21D8/12 A; H01F1/147 175; C21D9/56 101C; C22C38/00 303U; C22C38/06; C22C38/60

According to International Patent Classification (IPC) or to both national classification and IPC

| B. | FIELDS SEARCHED |
| --- | --- |

Minimum documentation searched (classification system followed by classification symbols)

C21D8/12; C21D9/46; C21D9/56; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020/136993 A1 (JFE STEEL CORP.) 02 July 2020 (2020-07-02) claims, paragraphs [0001]-[0007], [0020], [0040]-[0047], examples | 6 |
| A | | 1-5 |
| A | WO 2020/090156 A1 (JFE STEEL CORP.) 07 May 2020 (2020-05-07) entire text, all drawings | 1-6 |
| A | JP 2018-204052 A (JFE STEEL CORP.) 27 December 2018 (2018-12-27) entire text, all drawings | 1-6 |
| A | JP 2006-241563 A (NIPPON STEEL CORP.) 14 September 2006 (2006-09-14) entire text, all drawings | 1-6 |
| A | CN 103451399 A (TANGSHAN BRANCH OF HEBEI IRON & STEEL CO., LTD.) 18 December 2013 (2013-12-18) entire text | 1-6 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 December 2022** | **27 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/038167** |

| Patent document cited in search report | | | Publication date (day/month/year) | Patent family member(s) | | | Publication date (day/month/year) |
| --- | --- | --- | --- | --- | --- | --- | --- |
| WO | 2020/136993 | A1 | 02 July 2020 | US 2022/0056548 A1 claims, paragraphs [0002]-[0008], [0034], [0074]-[0086], examples | | | |
| | | | | EP | 3904551 | A1 | |
| | | | | TW | 202024352 | A | |
| | | | | KR | 10-2021-0082516 | A | |
| | | | | CN | 113166869 | A | |
| | | | | CA | 3122122 | A1 | |
| WO | 2020/090156 | A1 | 07 May 2020 | US 2021/0388456 A1 entire text, all drawings | | | |
| | | | | EP | 3875613 | A1 | |
| | | | | TW | 202018100 | A | |
| | | | | KR | 10-2021-0053979 | A | |
| | | | | CN | 112930408 | A | |
| | | | | CA | 3116570 | A1 | |
| | | | | BR | 112021006645 | A2 | |
| JP | 2018-204052 | A | 27 December 2018 | US 2021/0159002 A1 entire text, all drawings | | | |
| | | | | EP | 3633059 | A1 | |
| | | | | TW | 201903169 | A | |
| | | | | KR | 10-2019-0142357 | A | |
| | | | | CN | 110678568 | A | |
| | | | | RU | 2724346 | C1 | |
| | | | | MX | 2019014336 | A | |
| JP | 2006-241563 | A | 14 September 2006 | (Family: none) | | | |
| CN | 103451399 | A | 18 December 2013 | (Family: none) | | | |

**EP 4 414 465 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007043273 A